# EUROPEAN PATENT APPLICATION

(11) **EP 4 318 350 A1**
(43) Date of publication of application: **07.02.2024**
(21) Application number: 22188324.2
(22) Date of filing: 02.08.2022
(51) Int. Cl.: G06Q 20/02, G06Q 20/10, G06Q 20/38, G06Q 20/40

(54) **A LINKED PAYMENT REQUEST METHOD**

(71) Applicant: Vocalink International Limited, London EC4R 3AB (GB)
(72) Inventor: YUYE, Ashal, London (GB); TAN, An Ni, London (GB)
(74) Representative: Murgitroyd & Company

(57) **Abstract**

Typically, a bill payment platform has a linking construct, wherein a relationship or link is established between the creditor and the debtor. However, storing the token and using it with every payment request requires additional infrastructure investment and inventory for the creditor. Disclosed herein is a linked payment request method 100 comprising: creating 110 a link between a debtor and a creditor; generating 120 a unique link token configured to identify the link between the debtor and the creditor; providing 130 the link token to the creditor; receiving 140 a payment request from the creditor, wherein the payment request includes link information; and validating 150 the payment request; wherein the link information comprises: the link token 141; or a debtor identifier, a billing account identifier and a creditor identifier 142.

## Description

### Field of the Disclosure

The present disclosure relates generally to a linked payment request method and finds particular, although not exclusive, utility in providing a method for processing a payment request.

### Background

A debtor may settle or partially settle their debt to a creditor via a bill payment platform. Typically, a bill payment platform has a linking construct, wherein a relationship or link is established between the creditor and the debtor. Every time such a link is established, a token is created for the unique relationship. The participants must maintain the token for future use in the payment requests. A payment request without the token would be refused. However, storing the token and using it with every payment request requires additional infrastructure investment and inventory for the creditor.

Aspects of the present disclosure seek to provide a payment request method that alleviates these problems with prior known systems.

### Summary

According to a first aspect of the present disclosure, there is provided a linked payment request method comprising: creating a link between a debtor and a creditor; generating a unique link token configured to identify the link between the debtor and the creditor; providing the link token to the creditor; receiving a payment request from the creditor, wherein the payment request includes link information; and validating the payment request; wherein the link information comprises: the link token; or a debtor identifier, a billing account identifier and a creditor identifier. As such, a payment request may be made by providing the link token or the debtor identifier, the billing account identifier and the creditor identifier. Should the payment request not include the link token or the debtor identifier, the billing account identifier and the creditor identifier, the payment request may be rejected. The request may be validated and routed on the basis of the link token and on the basis of the debtor identifier, the billing account identifier and the creditor identifier. Any reference to validation of the request herein may be a reference to validation and routing.

In this way, greater flexibility is provided. To send a payment request, a party may provide either the link token or the debtor identifier, the billing account identifier and the creditor identifier. As such, the party need only store one of these data types. Typically, a creditor or credit service provider will have the debtor identifier, the billing account identifier and the creditor identifier stored for other purposes, meaning that they do not need to store additional data, namely the link token, to send future payment requests.

A linked payment may be a payment made from a debtor to a creditor, wherein a link or financial relationship between the debtor and creditor has been previously established. As such, a linked payment request may be a request to accept, validate, route and/or process such a payment.

Creating a link between the debtor and the creditor may comprise establishing a financial relationship between the debtor and the creditor. In particular, the link may indicate that the debtor receives goods and/or services from the creditor that will be settled with one or more future payment requests.

The link token may be of a standard form. The link token may be directly related to the creditor identifier, billing account identifier and/or debtor identifier. As such, a standard and reversible operation may be performed to generate the link token from the creditor identifier, billing account identifier and/or debtor identifier. Alternatively, the link token may be unrelated to the creditor identifier, billing account identifier and/or debtor identifier. The creditor identifier, billing account identifier and/or debtor identifier may be identified by referencing a look up table or database of links.

The link token being configured to identify the link between the debtor and the creditor may mean that the system is able to identify a link relationship between the debtor and the creditor on the basis of the link token. The system may or may not require additional information, such as a database of all pre-established creditor-debtor links. However, in some instances, a database of link tokens may be stored, but there is not a need to store respective links.

Providing the link token to the creditor may mean that the link token is sent directly or indirectly to the creditor. Alternatively, providing the link token to the creditor may mean that the link token is made available for access by the creditor. For example, the link token may be stored in a portal or account accessible by the creditor.

The payment request from the creditor may be received at any time following the provision of the link token to the creditor. In some embodiments, the link token may be time limited such that the link token is configured to expire after a predetermined period of time. As such, a payment request may not be accepted and/or validated following the expiry of a predetermined and agreed time period. The time period may be, for example, one month, three months, six months, 1 year, 2 years, 5 years, 15 years, 25 years, 30 years or any other desired period of time. In this way, the method may be applicable to payment requests with any payment terms, such as a mortgage.

The link information may be usable by the system to identify or establish the link between the creditor and the debtor. The debtor identifier may be any information that is usable to identify the debtor. The billing account identifier may be any information that is usable to identify the billing account. The creditor identifier may be any information that is usable to identify the creditor.

The debtor identifier may be a proxy. As such, the true identity of the debtor may be concealed and/or protected.

The method may further comprise processing the payment request. In this way, the payment request may be validated and routed, and the payment completed. The payment request may be rejected or otherwise barred if the payment request does not include the link information.

When the link information comprises the link token, the method may further comprise identifying the debtor, the billing account identifier and the creditor based on the link token. The debtor, the billing account identifier and the creditor may be identified on the basis of the link token by any means discussed herein, such as via a database of link tokens or directly from the link token data.

The link token may be usable to make a plurality of payment requests. Accordingly, the link token may be used to make several payment requests, such as for a regular or recurring payment or for any other future debt. Alternatively, the link token may be consumed following or during validation of the payment request such that the link token is not usable to make a second payment request. The method may further comprise generating a second unique link token and providing the second link token to the creditor, following the validation of the payment request. The second link token may be used to make a second payment request.

When the link information comprises the link token, the method may further comprise identifying, based on the link token, the creditor and the debtor in a database of link tokens. The database of link tokens may comprise issued link tokens and associated debtor and creditor information.

When the link information comprises the debtor identifier, the billing account identifier and the creditor identifier, the method may further comprise identifying, based on the link information, a link between the creditor and the debtor in a database of links. The database of links may comprise issued link tokens and associated debtor and creditor information. In this way, the link token need not include information related to, or derivable from, the debtor identifier, the billing account identifier and the creditor identifier. Such an arrangement may offer greater privacy and/or fraud protection.

The link between the creditor and the debtor may be creditor initiated. As such, the linked relationship between the debtor and the creditor may be established by the creditor. Alternatively, the link between the creditor and the debtor may be debtor initiated. As such, the linked relationship between the debtor and the creditor may be established by the debtor. The method may allow for the linked relationship to be established by either and/or both of the creditor and the debtor, to provide greater flexibility.

The method may comprise determining an identity of a party making the payment request. The method may comprise validating the request if the party making the request is the creditor, provided the other criteria are also met, such as if the link can be identified and if the link token belongs to the creditor. The method may comprise refusing the request if the party is not the creditor. In this way, a fraudulent request made by a party other than the creditor may be refused.

According to a second aspect, there is provided a data processing system comprising a processor configured to perform the method of the first aspect.

According to a third aspect, there is provided a computer program product comprising instructions which, when the program is executed by a computer, cause the computer to carry out the method of the first aspect.

According to a fourth aspect, there is provided a computer-readable medium comprising instructions which, when executed by a computer, cause the computer to carry out the method of the first aspect.

### Brief Description of the Drawings

The disclosure will be further described with reference to examples depicted in the accompanying figures in which:
Figure 1 is a method diagram showing a linked payment request method;
Figure 2 is a method diagram showing a debtor initiated linking method; and
Figure 3 is a method diagram showing a creditor initiated linking method.

### Detailed Description

The following description presents particular examples and, together with the drawings, serves to explain principles of the disclosure. However, the scope of the invention is not intended to be limited to the precise details of the examples, since variations will be apparent to a skilled person and are deemed to be covered by the description. Terms for features used herein should be given a broad interpretation that also encompasses equivalent functions and features.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

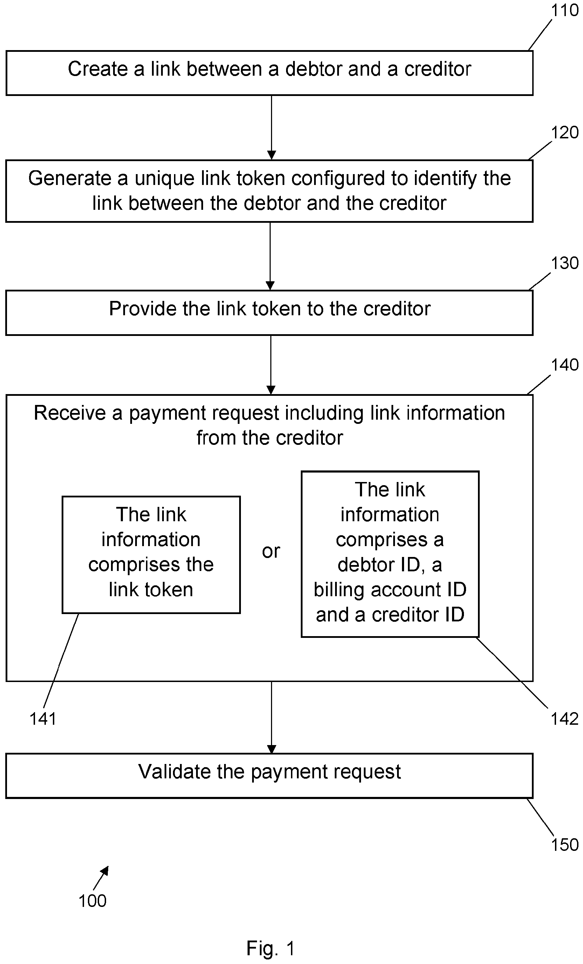

Figure 1 is a method diagram showing a linked payment request method 100. The method includes creating 110 a link between a debtor and a creditor. The link may indicate that the debtor receives goods and/or services from the creditor and may have a debt to the creditor that will be settled with one or more future payment requests. Once the link has been created, a creditor can send payment requests to the debtor so that that debtor can make one or more future payments against the request. The method 100 also includes generating 120 a unique link token configured to identify the link between the debtor and the creditor. The link token may be of a standard form known in the art. The link token being configured to identify the link between the debtor and the creditor may mean that the system is able to identify a link relationship between the debtor and the creditor on the basis of the link token.

Next, the method 100 includes providing 130 the link token to the creditor. The link token may be provided 130 to the creditor in any known way. For example, the link token may be sent directly to the creditor, and/or may be made available to the creditor via a link, portal or account. The method 100 may also include providing the link token to the debtor.

Additionally, the method 100 includes receiving 140 a payment request from the creditor. The payment request includes link information. The link information comprises: the link token 141; or a debtor identifier, a billing account identifier and a creditor identifier 142. As such, the creditor may have their request accepted and/or validated by providing either the link token or the debtor identifier, billing account identifier and creditor identifier. In this way, greater flexibility is provided. To process a payment, the creditor may provide either the link token or the debtor identifier, the billing account identifier and the creditor identifier. The creditor therefore need only store one of these data types. Typically, a creditor or credit service provider will have the debtor identifier, the billing account identifier and the creditor identifier stored for other purposes, meaning that they do not need to store additional data, namely the link token, to process future payments. Finally, the method 100 includes validating 150 the payment request.

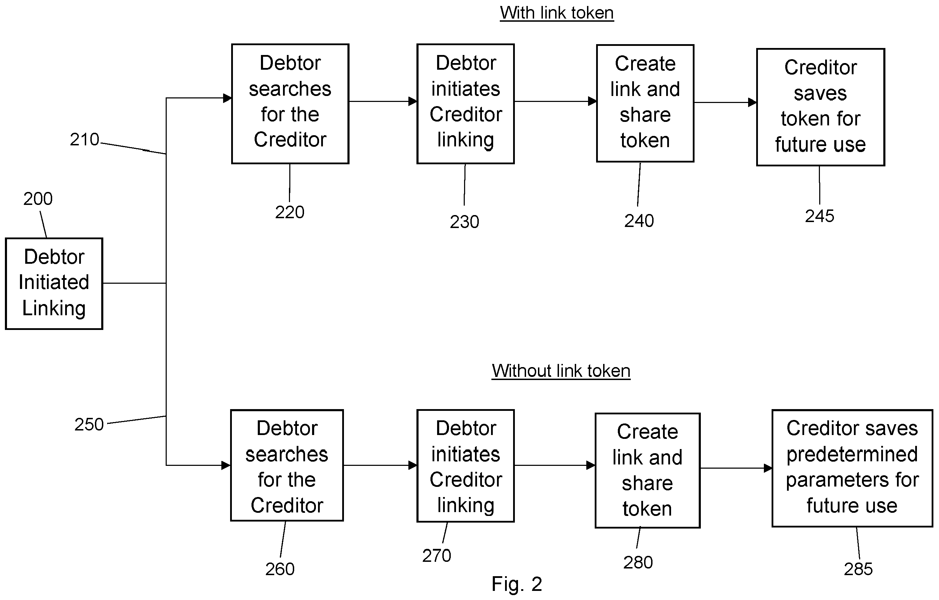

Figure 2 is a method diagram showing a debtor initiated linking method 200. The method 200 includes two linking options. The first option, shown as the upper route in Figure 2, is debtor initiated linking with a link token 210. The first step 220 is for the debtor to search for the creditor. Then, the debtor initiates creditor linking 230. Next, a link is created and the token is shared 240. Finally, the creditor saves the token for future use 245, as described herein. The second option, shown as the lower route in Figure 2, is debtor initiated linking without a link token 250. Each of the steps, except the final step, are identical to the first option. The first step 260 is for the debtor to search for the creditor. Then, the debtor initiates creditor linking 270. Next, a link is created and the token is shared 280. Finally, the creditor saves the predetermined parameters for future use 285, as described herein. Accordingly, by the debtor initiated linking method 200, a debtor may initiate a link and the creditor is provided with a link token. According to the preferences of the creditor, they may save either the link token or the predetermined parameters for future use.

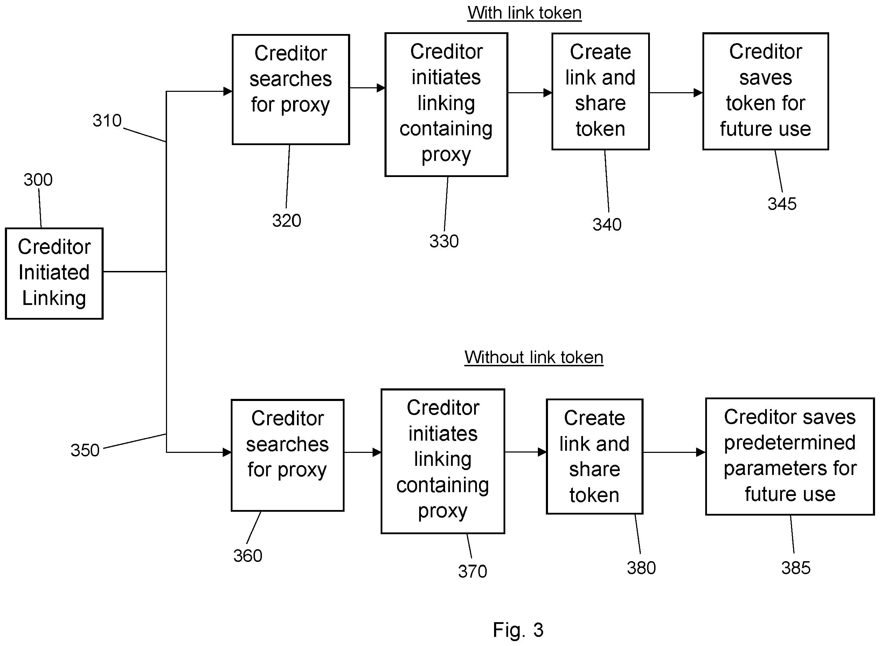

Figure 3 is a method diagram showing a creditor initiated linking method 300. The method 300 includes two linking options. The first option, shown as the upper route in Figure 3, is creditor initiated linking with a link token 310. The first step 320 is for the creditor to search for the proxy. The proxy may be a private and/or discrete debtor identifier. Then, the creditor initiates linking containing the proxy 330. Next, a link is created and the token is shared 340. Finally, the creditor saves the token for future use 345, as described herein. The second option, shown as the lower route in Figure 3, is creditor initiated linking without a link token 350. Each of the steps, except the final step, are identical to the first option. The first step 360 is for the creditor to search for the proxy. Then, the creditor initiates linking containing the proxy 370. Next, a link is created and the token is shared 380. Finally, the creditor saves the predetermined parameters for future use 385, as described herein. Accordingly, by the creditor initiated linking method 300, a creditor may initiate a link and the creditor is provided with a link token. According to the preferences of the creditor, they may save either the link token or the predetermined parameters for future use

## Claims

1. A linked payment request method comprising:
creating a link between a debtor and a creditor;
generating a unique link token configured to identify the link between the debtor and the creditor;
providing the link token to the creditor;
receiving a payment request from the creditor, wherein the payment request includes link information; and
validating the payment request;
wherein the link information comprises:
the link token; or
a debtor identifier, a billing account identifier and a creditor identifier.

2. The linked payment request method of claim 1, wherein the debtor identifier is a proxy.

3. The linked payment request method of claim 1 or 2, wherein the method further comprises processing the payment request.

4. The linked payment request method of any preceding claim, wherein the payment request is refused if the payment request does not include the link information.

5. The linked payment request method of any preceding claim, wherein, when the link information comprises the link token, the method further comprises identifying the debtor, the billing account identifier and the creditor based on the link token.

6. The linked payment request method of any preceding claim, wherein the link token is usable to make a plurality of payment requests.

7. The linked payment request method of any of claims 1 to 5, wherein the link token is consumed following or during validation of the payment request such that the link token is not usable to make a second payment request.

8. The linked payment request method of claim 7, further comprising generating a second unique link token and providing the second link token to the creditor, following the validation of the payment request.

9. The linked payment request method of any preceding claim, wherein, when the link information comprises the link token, the method further comprises identifying, based on the link token, the creditor and the debtor in a database of link tokens.

10. The linked payment request method of claim 9, wherein the database of link tokens comprises issued link tokens and associated debtor and creditor information.

11. The linked payment request method of any preceding claim, wherein the link between the creditor and the debtor is creditor initiated.

12. The linked payment request method of any of claims 1 to 10, wherein the link between the creditor and the debtor is debtor initiated.

13. A data processing system comprising a processor configured to perform the method of any preceding claim.

14. A computer program product comprising instructions which, when the program is executed by a computer, cause the computer to carry out the method of any of claims 1 to 12.

15. A computer-readable medium comprising instructions which, when executed by a computer, cause the computer to carry out the method of any of claims 1 to 12.
